# EUROPEAN PATENT APPLICATION

(11) **EP 4 818 279 A1**
(43) Date of publication of application: **07.10.2026**
(21) Application number: 24897421.4
(22) Date of filing: 21.11.2024
(51) Int. Cl.: C09D 175/04, C09D 5/00, C09D 7/61

(54) **PRIMER LAYER-FORMING COMPOSITION**

(30) Priority: 28.11.2023 JP 2023200767
(71) Applicant: Sakai Chemical Industry Co., Ltd., Sakai-shi, Osaka 590-8502 (JP)
(72) Inventor: HIRANO, Anna, Sakai-shi, Osaka 590-0985 (JP); IEDA, Takuma, Sakai-shi, Osaka 590-0985 (JP); ONISHI, Kasumi, Sakai-shi, Osaka 590-0985 (JP)
(74) Representative: Cabinet Beau de Loménie
(86) International application number: PCT/JP2024/041202
(87) International publication number: WO 2025/115735

(57) **Abstract**

The present invention provides a composition capable of forming a primer layer with high transparency and a high refractive index. The present invention relates to a primer layer-forming composition, containing a zirconium element-containing metal oxide (A) and a water-borne polyurethane resin (B), the zirconium element-containing metal oxide (A) having an average particle size of 1 to 20 nm as measured by a dynamic light scattering method, the zirconium element-containing metal oxide (A) in a form of a 30% by mass aqueous dispersion having a pH of 8 to 11, the composition having a silicon element content of 20 mol% or less relative to 100 mol% of the zirconium element in the zirconium element-containing metal oxide (A).

## Description

### TECHNICAL FIELD

The present invention relates to primer layer-forming compositions, particularly to primer layer-forming compositions useful in an application to lenses of eyeglasses and the like.

### BACKGROUND ART

In recent years, plastic lenses have become the mainstream for eyeglass lenses because they excel in lightness, impact resistance, and processability. However, plastic lenses are susceptible to scratching. To overcome the disadvantage, a hard coat layer is formed on the surface of a lens substrate. If the adhesion between the lens substrate and the hard coat layer is weak, cracking may occur, or impact resistance may decrease. To address this issue, a primer layer is provided between the lens substrate and the hard coat layer to improve adhesion and impact resistance. However, a difference in refractive indices between the primer layer and the lens substrate causes interference fringes due to light interference, degrading the appearance. Then, techniques are proposed for adjusting the refractive index of the primer layer to that of the lens substrate.

For example, Patent Literature 1 proposes a coating liquid to form a primer layer. The coating liquid contains surface-modified inorganic composite oxide fine particles having a carbon atom content of 2 to 10% by mass. The particles are obtained by subjecting inorganic composite oxide fine particles to surface modification with an organosilicon compound A represented by a predetermined formula or a partial hydrolysate thereof and an organosilicon compound B represented by a predetermined formula and having a boiling point of 120°C or lower at 1 atm or a partial hydrolysate thereof.

### CITATION LIST

### - Patent Literature

Patent Literature 1: JP 2014-152226 A

### SUMMARY OF INVENTION

### - Technical Problem

As described above, techniques for forming a primer layer on a lens have been developed. Yet, now that a growing demand for thinner and lighter lenses has driven the development of plastic lens substrates with a higher refractive index, the technique in Patent Literature 1 is insufficient because the coating of the surfaces of the inorganic composite oxide fine particles using other elements such as silicon reduces the refractive index of the particles, making it difficult to meet the requirement for coating on plastic lens substrates with a high refractive index. Thus, primer layer-forming compositions with a high refractive index and high transparency have been requested.

In view of the current state of the art described above, the present invention aims to provide a composition capable of forming a primer layer with high transparency and a high refractive index.

### - Solution to Problem

As a result of various studies on primer layer-forming compositions for lenses and the like, the present inventors found that a primer layer with high transparency and a high refractive index can be formed on a lens when the primer layer is formed using a composition that contains a zirconium element-containing metal oxide and a water-borne polyurethane resin and has a silicon element content of 20 mol% or less relative to 100 mol% of the zirconium element in the zirconium element-containing metal oxide (A), wherein the zirconium element-containing metal oxide has an average particle size within a predetermined range and also has a pH of 8 to 11 when it is in the form of a 30% by mass aqueous dispersion. Accordingly, the present inventors discovered a solution to the problem and arrived at the present invention

The present invention encompasses the following primer layer-forming compositions and the like.
[1] A primer layer-forming composition, including a zirconium element-containing metal oxide (A) and a water-borne polyurethane resin (B), the zirconium element-containing metal oxide (A) having an average particle size of 1 to 20 nm as measured by a dynamic light scattering method, the zirconium element-containing metal oxide (A) in a form of a 30% by mass aqueous dispersion having a pH of 8 to 11, the composition having a silicon element content of 20 mol% or less relative to 100 mol% of the zirconium element in the zirconium element-containing metal oxide (A).
[2] The primer layer-forming composition according to the above [1], wherein the primer layer-forming composition contains the zirconium element-containing metal oxide (A) in an amount of 40 to 80% by mass relative to 100% by mass of solids in the primer layer-forming composition.
[3] The primer layer-forming composition according to the above [1] or [2], wherein a solid content of the water-borne polyurethane resin (B) is 20 to 60% by mass relative to a solid content, taken as 100% by mass, of the primer layer-forming composition.
[4] The primer layer-forming composition according to any one of the above [1] to [3], wherein the primer layer-forming composition is used for lenses.
[5] A lens coated with the primer layer-forming composition according to any one of the above [1] to [3].
[6] A method for producing a primer layer-forming composition, including mixing a zirconium element-containing metal oxide (A) with a water-borne polyurethane resin (B), the zirconium element-containing metal oxide (A) having an average particle size of 1 to 20 nm as measured by a dynamic light scattering method, the zirconium element-containing metal oxide (A) in a form of a 30% by mass aqueous dispersion having a pH of 8 to 11.

### - Advantageous Effects of Invention

The primer layer-forming composition of the present invention has the above-described structure and is capable of forming a primer layer with high transparency and a high refractive index. Therefore, it can be suitably used for primer layers for lenses and other applications.

### DESCRIPTION OF EMBODIMENTS

Hereinafter, preferred embodiments of the present invention will be specifically described, but the present invention is not limited only to the following descriptions and may be suitably changed and applied in the scope of the present invention without changing the gist thereof. Combined embodiments of two or more of individual preferred embodiments of the present invention described below are also preferred embodiments of the present invention.

### [Primer layer-forming composition]

The primer layer-forming composition of the present invention includes a zirconium element-containing metal oxide (A) and a water-borne polyurethane resin (B). The zirconium element-containing metal oxide (A) has an average particle size of 1 to 20 nm as measured by a dynamic light scattering method. The zirconium element-containing metal oxide (A) in the form of a 30% by mass aqueous dispersion has a pH of 8 to 11. The composition has a silicon element content of 20 mol% or less relative to 100 mol% of the zirconium element in the zirconium element-containing metal oxide (A).

The pH of a 30% by mass aqueous dispersion of the zirconium element-containing metal oxide (A), which is a raw material before being added to the composition, is within the above range, and also the zirconium element-containing metal oxide (A) has an average particle size within the above range. Consequently, the primer layer-forming composition of the present invention has excellent transparency. Moreover, the composition has a silicon content within the above range and thus has a high refractive index.

Since the primer layer-forming composition of the present invention has the above-described structure, a primary layer formed of the composition on a subject such as a lens is also excellent in solvent resistance, adhesion, weather resistance, and impact resistance.

The primer layer-forming composition of the present invention has a silicon element content of 20 mol% or less relative to 100 mol% of the zirconium element in the zirconium element-containing metal oxide (A), so that the refractive index can be sufficiently increased. The silicon element content is preferably 10 mol% or less, more preferably 5 mol% or less, still more preferably 1 mol% or less, particularly preferably 0.1 mol% or less, most preferably 0 mol%.

The primer layer-forming composition preferably contains the zirconium element-containing metal oxide (A) in an amount of 40 to 80% by mass relative to 100% by mass of solids (non-volatile components) in the primer layer-forming composition. The percentage is more preferably 43 to 75% by mass, still more preferably 44 to 73% by mass, particularly preferably 45 to 70% by mass.

In the primer layer-forming composition, the solid content of the water-borne polyurethane resin (B) is preferably 20 to 60% by mass relative to the solid content, taken as 100% by mass, of the primer layer-forming composition. The solid content is more preferably 25 to 57% by mass, still more preferably 27 to 56% by mass, particularly preferably 30 to 55% by mass.

In the primer layer-forming composition, the water-borne polyurethane resin (B) preferably contains solids in an amount of 25 to 150% by mass relative to 100% by mass of the zirconium element-containing metal oxide (A). The percentage is more preferably 30 to 145% by mass, still more preferably 35 to 140% by mass, particularly preferably 40 to 130% by mass.

The solid concentration of the primer layer-forming composition is preferably controlled by adding a solvent to the primer layer-forming composition. Although the solid concentration of the primer layer-forming composition is not limited, it is preferably 5 to 50% by mass, more preferably 5 to 45% by mass, still more preferably 6 to 40% by mass, particularly preferably 7 to 30% by mass.

The percentage of a solvent in the primer layer-forming composition is preferably a value calculated by subtracting the solid concentration from 100% by mass of the composition.

The primer layer-forming composition of the present invention may optionally contain other components in addition to the zirconium element-containing metal oxide (A), the water-borne polyurethane resin (B), and a solvent. Although the percentage of other components is not limited, it is preferably 0 to 30% by mass relative to 100% by mass of solids in the primer layer-forming composition. The percentage is more preferably 0 to 28% by mass, still more preferably 0 to 25% by mass, particularly preferably 0 to 20% by mass.

The primer layer-forming composition of the present invention preferably has a refractive index of 1.55 to 1.74 when it is in the form of a cured film with a thickness of 1 µm. The refractive index is preferably 1.58 to 1.70.

The refractive index of the cured film can be measured by the method described in EXAMPLES.

The primer layer-forming composition of the present invention preferably has a total light transmittance of 94.0 to 100.0% when it is in the form of a cured film with a thickness of 3 µm. The total light transmittance is preferably 95.0 to 100.0%.

The total light transmittance of the cured film can be measured by the method described in EXAMPLES.

The essential components and optional components contained in the primer layer-forming composition of the present invention will be further described below.

### <Zirconium element-containing metal oxide (A)>

The zirconium element-containing metal oxide (A) is not limited as long as it contains zirconium atoms and oxygen atoms, and may contain elements other than zirconium atoms and oxygen atoms. Examples of other elements include, in addition to the above-described silicon, at least one stabilizing element selected from sodium, magnesium, aluminum, potassium, titanium, hafnium, and rare earth elements. The presence of the stabilizing element in the zirconium element-containing metal oxide (A) further improves the thermal stability of the metal oxide (A).

Specific examples of the rare earth elements include Y, La, Ce, Pr, Nd, Sm, Eu, Tb, Dy, and Ho.

The amount of the above-described other elements in the zirconium element-containing metal oxide (A) is not limited as long as the amount of such other elements is 20 mol% or less relative to 100 mol% of the zirconium element. Yet, the amount is preferably 0 to 20 mol%, more preferably 0 to 10 mol%, still more preferably 0 to 5 mol% relative to 100 mol% of the zirconium element.

In an embodiment, the amount of the above-described other elements may be more than 0 mol%.

The zirconium element-containing metal oxide (A) in the form of a dispersion has an average particle size (D50) of 1 to 20 nm as measured by a dynamic light scattering method. In the zirconium element-containing metal oxide (A) having an average particle size of 1 nm or more, aggregation of the primary particles can be sufficiently suppressed. The zirconium element-containing metal oxide (A) having an average particle size of 20 nm or less can sufficiently suppress a reduction in the transparency of a primer layer to be obtained. The average particle size is preferably 1 to 19 nm, more preferably 1 to 18 nm, still more preferably 2 to 17 nm. The D50/D90 ratio of the zirconium element-containing metal oxide is more preferably 0.2 to 1.0, still more preferably 0.3 to 1.0. A primer layer-forming composition produced using such a zirconium element-containing metal oxide having a small average particle size (D50) and a narrow particle size distribution has a higher transparency.

The surface of the zirconium element-containing metal oxide (A) may be treated with an inorganic compound or an organic compound. Examples of the inorganic compound include silicon oxide and aluminum oxide. Examples of the organic compound include a silane coupling agent, a titanate coupling agent, and a surfactant having an acidic group such as a phosphoric acid group, a carboxylic acid group, or a phosphonic acid group.

The zirconium element-containing metal oxide (A) in the form of a 30% by mass aqueous dispersion has a pH of 8 to 11 before being added to the composition. This improves the transparency of a primer layer to be obtained. The pH is more preferably 8.5 to 11, still more preferably 9 to 11.

The pH can be measured at room temperature (25°C) using a pH meter equipped with a glass electrode.

The zirconium element-containing metal oxide (A) may be in any configuration and preferably has crystallinity. The crystal structure is preferably, for example, cubic, tetragonal, or monoclinic, and may include a plurality of crystal structures. When the zirconium element-containing metal oxide (A) includes the above crystal structure, the refractive index and hardness of the zirconium element-containing metal oxide (A) are further improved.

Non-limiting examples of the method for producing the zirconium element-containing metal oxide (A) include a method of heating and hydrolyzing a zirconium salt aqueous solution (hydrolysis method), a method of adding an alkali to a zirconium salt aqueous solution to form a zirconium hydroxide and peptizing the zirconium hydroxide (neutralization coprecipitation method), and a method of adding an acid and an alkali to a zirconium hydroxide and then subjecting the resultant to a hydrothermal treatment (hydrothermal synthesis method).

The method for producing the zirconium element-containing metal oxide (A) preferably involves a neutralization coprecipitation step of adding an alkali to an aqueous solution containing a zirconium salt to form a hydroxide and peptizing the hydroxide, and preferably involves a hydrothermal step of adding an acid or a salt thereof to a product obtained by the neutralization coprecipitation step and subjecting the resultant to a hydrothermal treatment.

The zirconium salt to be used in the above neutralization coprecipitation step may be any zirconium salt that contains a zirconium element. Still, the zirconium salt is preferably a chloride, an oxychloride, a sulfate salt, a nitrate salt, or a similar salt, more preferably a chloride or an oxychloride. Examples of a zirconium compound to be used as a raw material in the production of a slurry containing a zirconium element-containing compound include a hydroxide, an oxyhydroxide, a chloride, a sulfide, a sulfate salt, a nitrate salt, a carbonate salt, a hydrogen carbonate salt, an acetate salt, a phosphate salt, an oxalate salt, a butyrate salt, a selenate salt, an iodate salt, a fluoride, and an oxychloride. Preferred among these are water-soluble zirconium compounds suitable for production, such as an oxychloride, a chloride, a sulfate salt, a nitrate salt, an acetate salt, and similar salts.

In the case where the zirconium element-containing metal oxide (A) contains elements other than zirconium atoms and oxygen atoms, preferably, salts of other elements are added in the neutralization coprecipitation step. Examples of the salts of other elements include a chloride, an oxychloride, a sulfate salt, a nitrate salt, and an acetate salt.

Non-limiting examples of the alkali to be used in the neutralization coprecipitation step include hydroxides of alkali metals or alkaline earth metals, such as sodium hydroxide, potassium hydroxide, and calcium hydroxide; ammonia; and organic amines. Preferred among these are hydroxides of alkali metals, such as sodium hydroxide and potassium hydroxide.

The amount of the alkali to be used in the neutralization coprecipitation step is not limited and is preferably 10 to 1,000% by mol relative to 100% by mol in total of the zirconium element and the other elements.

Non-limiting examples of the acid or a salt thereof to be used in the hydrothermal step include inorganic acids such as phosphoric acid; organic acids such as formic acid, acetic acid, propionic acid, oxalic acid, malonic acid, succinic acid, fumaric acid, maleic acid, lactic acid, malic acid, tartaric acid, citric acid, and gluconic acid; and salts of these acids. Organic acids and salts thereof are preferred among these.

The amount of the acid or a salt thereof to be used in the hydrothermal step is not limited and is preferably 50 to 1,000% by mol, more preferably 100 to 500% by mol relative to 100% by mol in total of the zirconium element and the other elements.

The hydrothermal temperature in the hydrothermal step is not limited and is preferably 170°C to 230°C, more preferably 175°C to 220°C.

The duration of the hydrothermal treatment in the hydrothermal step is not limited and is preferably 1 to 10 hours, more preferably 1.5 to 6 hours.

The method for producing the zirconium element-containing metal oxide (A) preferably includes a washing step after the neutralization coprecipitation step and/or the hydrothermal step.

The washing method in the washing step is not limited, and washing can be performed by a conventionally used method. For example, after the neutralization coprecipitation step, washing by filtration, water washing, or the like is preferable. After the hydrothermal step, an ultrafiltration membrane or the like is preferably used.

In the case of producing the zirconium element-containing metal oxide (A) by the above production method, a product to be obtained is an aqueous dispersion. Therefore, before the product is used for the primer layer-forming composition of the present invention, the water may be replaced by an organic solvent.

Non-limiting examples of the organic solvent include those having good compatibility with water, including alcohols such as methanol, ethanol, and isopropanol; ketones such as acetone; esters such as ethyl lactate; polyhydric alcohols and ethers thereof such as ethylene glycol, ethylene glycol monomethyl ether, ethylene glycol monobutyl ether, propylene glycol monomethyl ether, and propylene glycol monomethyl ether acetate; and cyclic ethers such as dioxane and tetrahydrofuran. Each of these may be used alone, or two or more of these may be used in combination. Moreover, the organic solvent may be appropriately used together with an organic solvent that has good compatibility with these organic solvents. Examples of such an organic solvent include ketones such as acetylacetone, methyl ethyl ketone, and methyl isobutyl ketone, esters such as ethyl acetate and butyl acetate, and aromatic hydrocarbons such as benzene and toluene.

C1-C3 lower alcohols are preferred, and methanol is more preferred among these.

### <Water-borne polyurethane resin (B)>

The water-borne polyurethane resin (B) contained in the primer layer-forming composition of the present invention may be any polymer that has urethane bonds and contains water. Examples include self-emulsifying water-borne polyurethane resins having a hydrophilic group such as an anionic group, a cationic group, or a nonionic group; and forcibly emulsified water-borne polyurethane resins that are forcibly dispersed in water using an emulsifier. Self-emulsifying water-borne polyurethane resins are preferably used. The water-borne polyurethane resin preferably has an average particle size of 0.06 µm or less. The water-borne polyurethane resin may be a commercial product. Examples of the commercial product include Evafanol series available from Nicca Chemical Co., Ltd., Superflex series available from Dai-Ichi Kogyo Seiyaku Co., Ltd., and Adeka Bontighter series available from ADEKA Corporation.

Specific examples of the water-borne polyurethane resin (B) include non-yellowing isocyanate-polyester water-borne polyurethane resins, non-yellowing isocyanate-polyether water-borne polyurethane resins, non-yellowing isocyanate-polycarbonate water-borne polyurethane resins, non-yellowing isocyanate-polyester/ether water-borne polyurethane resins, non-yellowing isocyanate-polyester/polycarbonate water-borne polyurethane resins, aromatic isocyanate-polyester water-borne polyurethane resins, aromatic isocyanate-polyether water-borne polyurethane resins, aromatic isocyanate-polycarbonate water-borne polyurethane resins, aromatic isocyanate-polyester/ether water-borne polyurethane resins, and aromatic isocyanate-polyester/polycarbonate water-borne polyurethane resins. Non-yellowing water-borne polyurethane resins are preferred among these, and use thereof leads to superior solvent resistance and weather resistance. The water-borne polyurethane resin (B) is more preferably a non-yellowing isocyanate-polyester water-borne polyurethane resin, a non-yellowing isocyanate-polyester/ether water-borne polyurethane resin, or a non-yellowing isocyanate-polycarbonate water-borne polyurethane resin.

Non-limiting examples of the solvent usable in the primer layer-forming composition of the present invention include water and organic solvents. Any type of organic solvents may be used, including, for example, alcohol-based solvents, ketonebased solvents, ether-based solvents, ester-based solvents, hydrocarbon-based solvents, halogenated hydrocarbon-based solvents, amide-based solvents, sulfone-based solvents, and sulfoxide-based solvents.

The solvent is preferably water and/or a water-soluble organic solvent and may be a solvent mixture of water and a water-soluble organic solvent. The solvent is more preferably water, methanol, ethanol, isopropanol, or propylene glycol monomethyl ether.

The water-soluble organic solvent refers to an organic solvent having compatibility with water; specifically, an organic solvent with a water solubility of 10% by mass or more, preferably 50% by mass or more at 25°C.

Examples of the water-soluble organic solvent include alcohols such as methanol, ethanol, isopropanol, ethylene glycol, propylene glycol, diethylene glycol, dipropylene glycol, trimethylene glycol, tripropylene glycol, 1,2-butanediol, 1,3-butanediol, 1,4-butanediol, 1,4-butenediol, and hexylene glycol; and polyhydric alcohols and ethers thereof such as ethylene glycol monomethyl ether, ethylene glycol monoisopropyl ether, ethylene glycol monoethyl ether, ethylene glycol mono-n-propyl ether, ethylene glycol mono-n-butyl ether, ethylene glycol mono-t-butyl ether, propylene glycol monomethyl ether, propylene glycol monoethyl ether (1-methoxy-2-propanol), propylene glycol mono-n-propyl ether, and propylene glycol monomethyl ether acetate; ketones such as acetone, diacetone alcohol, and acetylacetone; and amides such as N-methyl-2-pyrrolidone.

The primer layer-forming composition of the present invention may contain other components in addition to the zirconium element-containing metal oxide (A), the water-borne polyurethane resin (B), and a solvent. Non-limiting examples of such other components include various additives such as oxides of metals other than zirconium, dispersants, surface treatment agents, leveling agents, crosslinking agents, chelating agents, antistatic agents, defoamers, flame retardants, ultraviolet absorbers, antidegradants, coating film modifiers, photostabilizers, antioxidants, anti-coloring agents, and dyes.

Examples of the oxides of metals other than zirconium include oxides of metals such as Ti, Al, Sn, Sb, Ta, Ce, La, Fe, Zn, and W. The oxides of metal other than zirconium are preferably titanium oxide, antimony oxide, zinc oxide, or cerium oxide and may be a composite of these metal oxides. These metal oxides are commercially available, and examples of the commercial products include sols in which particles containing an oxide of any of these metals are dispersed in water or an organic solvent.

Examples of the dispersants include anionic surfactants such as sulfate ester surfactants, carboxylic acid surfactants, and phosphate ester surfactants; cationic surfactants such as quaternary ammonium surfactants; non-ionic surfactants such as alkyl ether surfactants; amphoteric surfactants such as alkyl betaine surfactants; and polymeric surfactants.

Examples of the leveling agents include silicone-based leveling agents, fluorine-based leveling agent, acrylic leveling agent, and acrylic silicone-based leveling agents.

### [Method for producing primer layer-forming composition]

The present invention also encompasses a method for producing a primer layer-forming composition, including mixing a zirconium element-containing metal oxide (A) with a water-borne polyurethane resin (B), the zirconium element-containing metal oxide (A) having an average particle size of 1 to 20 nm as measured by a dynamic light scattering method, the zirconium element-containing metal oxide (A) in a form of a 30% by mass aqueous dispersion having a pH of 8 to 11.

The zirconium element-containing metal oxide (A) may be mixed with the water-borne polyurethane resin (B) by any mixing technique that can mix the zirconium element-containing metal oxide (A) with the water-borne polyurethane resin (B). They are preferably mixed by stirring, for example.

The zirconium element-containing metal oxide (A) used in the mixing has an average particle size of 1 to 20 nm as measured by a dynamic light scattering method. The zirconium element-containing metal oxide (A) in the form of a 30% by mass aqueous dispersion has a pH of 8 to 11.

The method for producing the zirconium element-containing metal oxide (A) is as described above. It suffices that the zirconium element-containing metal oxide (A) in the form of a 30% by mass aqueous dispersion has a pH of 8 to 11 before being mixed with the water-borne polyurethane resin (B). The zirconium element-containing metal oxide (A) may be subjected to solvent replacement with an organic solvent such as methanol before being mixed with the water-borne polyurethane resin (B).

The amounts of the zirconium element-containing metal oxide (A) and the water-borne polyurethane resin (B) added in the mixing are not limited. Preferably, they are added so as to satisfy the above-described preferable percentages in the primer layer-forming composition.

### [Application of primer layer-forming composition]

The primer layer-forming composition of the present invention can be suitably used for a primer layer (primer film) or a similar layer between a lens substrate and a hard coat layer in optical plastics such as lenses.

The present invention also relates to a lens coated with the primer layer-forming composition, that is, a lens with a primer layer formed using the primer layer-forming composition.

The method for forming the primer layer is not limited and may be a known method such as a dipping method, a spin coat method, a flow coat method, or a spray method. A primer layer coated on the surface of a lens by such a method is subsequently cured by thermal energy (heat transfer, convection, radiation). The curing conditions, for example in the case of curing in a thermal environment of hot air convection, preferably include an atmosphere temperature of 80°C to 130°C and a duration of 5 to 180 minutes.

The lens may be any lens provided with a primer layer formed using the primer layer-forming composition. Preferably, a primer film is disposed on a lens substrate, and a hard coat film including a coating composition is disposed as an outer layer of the primer film.

More preferably, a reflection-preventing film or a stain-proofing coating is laminated on the lens.

The coating composition may be any coating composition which is usually used. Examples include compositions containing, for example, inorganic particles such as inorganic oxide fine particles and a hydrolyzable group-containing organosilicon compound (silane coupling agent) or a hydrolysate thereof or a hydrolyzed condensate thereof.

Examples of the hydrolyzable group-containing organosilicon compound include γ-glycidoxypropyltrimethoxysilane, γ-glycidoxypropylmethyldimethoxysilane, tetraethoxysilane, methyl triethoxysilane, 1,2-bis(triethoxysilyl)ethane, vinyl trimethoxysilane, and (meth)acryloxypropyl trimethoxysilane.

Examples of the inorganic oxide fine particles include fine particles of oxides of zirconium, silicon, tin, titanium, or cerium and composite fine particles of these.

The lens has a refractive index of preferably 1.50 to 1.74, more preferably 1.60 to 1.67.

The lens has a haze of preferably 0.5% or less, more preferably 0.4% or less as measured by a haze meter.

With regard to the material of the lens, plastic lenses having the molecular structures of the following resins are commercially available: aliphatic allyl carbonate resins, polyamide resins, polyurea resins, methacrylate resins, aromatic allyl carbonate resins, polycarbonate resins, polyurethane resins, polythiourethane resins, episulfide resins, and thioepoxy resins. These products can be suitably used.

The use of the primer layer-forming composition of the present invention for a plastic lens is a preferred embodiment of the present invention.

The lens is preferably used in an application to a lens of eyeglasses, though not limited thereto.

An embodiment in which the lens is an eyeglass lens is a preferred embodiment of the present invention.

### EXAMPLES

The present invention will be described in more detail with reference to, but not limited to, examples. It should be noted that the terms "part(s)" and "%" refer to "part(s) by mass" and "% by mass", respectively, unless otherwise stated.

### <Evaluation of physical properties>

The physical properties of the zirconium element-containing metal oxide (A) and the primer layer-forming composition were evaluated by the following procedures.

### <Average particle size of zirconium element-containing metal oxide>

The average particle size of the zirconium-containing metal oxide in a dispersion thereof was measured by a dynamic light scattering (DLS) method (using UPA-UT available from Nikkiso Co., Ltd.), and the values of D50, D90, and Dmax were calculated.

### <pH of dispersion of zirconium element-containing metal oxide>

The pH of a 30% by mass aqueous dispersion of the zirconium element-containing metal oxide was measured at room temperature (25°C) using a pH meter equipped with a glass electrode.

### <Weight change ratio (%) of water-borne polyurethane resin before and after solvent resistance test>

The weight change ratio (%) before and after a solvent resistance test was determined through the following procedures 1) to 7).
1) The tare weight (W₀) of a 76 × 26 mm glass slide substrate with a thickness of 1.2 to 1.5 mm was measured.
2) A resin was applied onto the glass slide substrate at a rate of 130 mm/min by a dipping method.
3) The resin-coated glass slide substrate was heated at 90°C for 10 minutes.
4) After heating, the tare weight (W₁) of the glass slide substrate was measured.
5) The substrate was immersed in a mixed liquid of methanol:propylene glycol monomethyl ether = 3:1 at 25°C for 10 minutes.
6) After immersion, the tare weight (W₂) of the glass slide substrate was measured.
7) The obtained values of W₁ and W₂ were substituted in the following formula to determine the weight change ratio. $Weight change ratio = \left[\left({W}_{2}-{W}_{1}\right)/\left({W}_{1}-{W}_{0}\right)\right] \times 100$

### <Haze and total light transmittance of cured film of primer layer-forming composition>

The haze and the total light transmittance of a cured film of the primer layer-forming composition were measured using a haze meter (NDH4000 available from Nippon Denshoku Industries Co., Ltd.).

A sample for measuring the haze and the total light transmittance of a cured film of the primer layer-forming composition was prepared through the following procedures 1) to 3).
1) In the method for preparing primer layer-forming compositions described in examples and a comparative example, the solid concentration of each primer layer-forming composition was adjusted to 22.5% by mass by reducing the water added.
2) The primer layer-forming composition obtained in the procedure 1) was applied onto a glass slide substrate at a rate of 130 mm/min by a dipping method.
3) After application, the glass slide substrate was cured by heating at 90°C for 10 minutes, thereby forming a cured film of the primer layer-forming composition with a thickness of 3 µm for measuring haze and total light transmittance on the glass slide substrate.

### <Refractive index of cured film (primer layer) of primer layer-forming composition>

The refractive indices of cured films (primer layers) of the primer layer-forming compositions obtained in examples and a comparative example were measured using a spectroscopic film thickness meter (F20 available from Filmetrics, Inc.).

### <Investigation of contamination of hard coat (HC) liquid by cured film of primer layer-forming composition>

The presence or absence of contamination of a hard coat liquid by a cured film of the primer layer-forming composition was investigated through the following procedures 1) to 5).
1) The primer layer-forming composition was applied onto a lens substrate at a rate of 130 mm/min by a dipping method.
2) The lens substrate coated with the primer layer-forming composition was heated at 90°C for 10 minutes for pre-curing, thereby forming a primer layer with a thickness of 1 µm on the lens substrate.
3) The hard coat liquid described in Production Example 6 was applied onto the lens substrate coated with the primer layer-forming composition at a rate of 130 mm/min by a dipping method.
4) The lens substrate coated with the hard coat liquid was heated at 90°C for 10 minutes for pre-curing, and subsequently heated at 120°C for two hours for finish curing, thereby forming a hard coat layer with a thickness of 3 µm.
5) The appearance of the lens substrate coated with the primer layer and the hard coat layer was visually evaluated according to the following criteria.
   ∘: No cloudiness is observed.
   ×: Cloudiness is observed.

### <Adhesion of cured film of primer layer-forming composition>

Cuts were made at 1 mm intervals with a knife on the surface of the lens substrate coated with the primer layer and the hard coat layer to form 100 squares of 1 square mm. A cellophane adhesive tape was strongly pressed against these squares and then rapidly pulled in a direction 90 degrees to the in-plane direction of the lens substrate. This operation was performed 10 times in total. The number of squares that were not peeled off was counted and evaluated according to the following criteria.
∘: The number of squares which are not peeled off is 95 or more.
×: The number of squares which are not peeled off is less than 95.

### <Impact resistance of cured film of primer layer-forming composition>

An antireflection layer was formed on the lens substrate coated with the primer layer and the hard coat layer. The formation of the antireflection layer was outsourced to Nidec Corporation.

A 16.2 g steel ball was dropped from a height of 127 cm onto the center of the lens substrate coated with the primer layer, the hard coat layer, and the antireflection layer. Occurrence of damage was visually evaluated according to the following criteria.
∘: No cracks or fractures are observed in the lens substrate or the coating films.
×: The lens substrate or the coating films is/are damaged.

### <Appearance of cured film of primer layer-forming composition after weather resistance test>

The lens substrate coated with the primer layer and the hard coat layer was subjected to a test in accordance with ISO 4892-2 using a xenon weathering tester (Ci4000 available from ATLAS), and the appearance of the lens substrate after 40 hours was visually evaluated according to the following criteria.
∘: No change in transparency nor no discoloration is observed.
×: A decrease in transparency is observed.

### <Adhesion of cured film of primer layer-forming composition after weather resistance test>

The lens substrate coated with the primer layer and the hard coat layer was subjected to a test in accordance with ISO 4892-2 using a xenon weathering tester (Ci4000 available from ATLAS), and the adhesion of the lens substrate after 40 hours was visually evaluated according to the following criteria.
∘: The number of squares which are not peeled off is 95 or more.
×: The number of squares which are not peeled off is less than 95.

### (Production Example 1: Production of aqueous dispersion (A) of zirconium element-containing metal oxide)

An amount of 0.76 L of an aqueous mixed solution containing zirconium oxychloride at a concentration of 0.6 mol/L and yttrium chloride at a concentration of 0.03 mol/L, and 0.53 L of an aqueous solution containing sodium hydroxide at a concentration of 1.9 mol/L were prepared. The aqueous mixed solution of zirconium oxychloride and yttrium chloride and the aqueous solution of sodium hydroxide were simultaneously poured into a precipitation reactor previously charged with 0.74 L of pure water, thereby causing coprecipitation of zirconium oxychloride and yttrium chloride through simultaneous neutralization. Thus, a slurry of particles of the coprecipitate of zirconium oxide and yttrium was obtained. The obtained slurry was filtered and washed and then repulped with pure water to adjust the solid content of the slurry to 5.6% by mass in terms of zirconium oxide and yttrium oxide, thereby obtaining 1 L of a slurry. The electroconductivity of the slurry was 235 µS/cm. Subsequently, 140.8 g (1 part by mol relative to 1 part by mol of a total of zirconium and yttrium in the slurry) of sodium citrate dihydrate was added to the slurry, and the mixture was subjected to hydrothermal treatment at 200°C for three hours to obtain a translucent dispersion. The translucent dispersion was washed and concentrated using an ultrafilter membrane to obtain an aqueous dispersion (A) of a zirconium element-containing metal oxide containing the zirconium element-containing metal oxide in an amount of 30% by mass. The aqueous dispersion (A) was a solid solution containing 5.0 mol% of yttrium.

### (Production Example 2: Production of methanol dispersion (B) of zirconium element-containing metal oxide)

An amount of 10 kg of the aqueous dispersion (A) of a zirconium element-containing metal oxide obtained above was concentrated using an ultrafilter membrane. To the concentrated dispersion was added methanol in an amount equivalent to the amount of the obtained filtrate. The concentration of the dispersion and the dilution with methanol were simultaneously performed continuously and parallelly, so that water as a dispersing medium of the dispersion was replaced by methanol while maintaining the amount of the zirconium element-containing metal oxide in the dispersion at 30% by weight. Thus, a methanol dispersion (B) of a zirconium element-containing metal oxide containing the zirconium element-containing metal oxide in an amount of 30% by mass was obtained.

### (Production Example 3: Production of aqueous dispersion (C) of zirconium element-containing metal oxide)

An amount of 0.76 L of an aqueous solution containing zirconium oxychloride at a concentration of 0.6 mol/L and 0.53 L of an aqueous solution containing sodium hydroxide at a concentration of 1.9 mol/L were prepared. The aqueous solution of zirconium oxychloride and the aqueous solution of sodium hydroxide were simultaneously poured into a precipitation reactor previously charged with 0.74 L of pure water, thereby causing coprecipitation of zirconium oxychloride through simultaneous neutralization. Thus, a slurry of particles of the coprecipitate of zirconium oxide was obtained. The obtained slurry was filtered and washed and then repulped with pure water to adjust the solid content of the slurry to 5.6% by mass in terms of zirconium oxide, thereby obtaining 1 L of a slurry. The electroconductivity of the slurry was 235 µS/cm. Subsequently, 140.8 g (1 part by mol relative to 1 part by mol of zirconium in the slurry) of sodium citrate dihydrate was added to the slurry, and the mixture was subjected to hydrothermal treatment at 200°C for three hours to obtain a translucent dispersion. The translucent dispersion was washed and concentrated using an ultrafilter membrane to obtain an aqueous dispersion (C) of a zirconium element-containing metal oxide containing the zirconium element-containing metal oxide in an amount of 30% by mass.

### (Production Example 4: Production of aqueous dispersion (D) of zirconium element-containing metal oxide)

An amount of 90 L of an aqueous mixed solution containing zirconium oxychloride at a concentration of 0.6 mol/L and yttrium chloride at a concentration of 0.03 mol/L, and 68 L of an aqueous solution containing sodium hydroxide at a concentration of 1.9 mol/L were prepared. The aqueous mixed solution of zirconium oxychloride and yttrium chloride and the aqueous solution of sodium hydroxide were simultaneously poured into a precipitation reactor previously charged with 82 L of pure water, thereby causing coprecipitation of zirconium oxychloride and yttrium chloride through simultaneous neutralization. Thus, a first aqueous slurry of particles of the coprecipitate of zirconium oxide and yttrium was obtained. The first aqueous slurry was filtered and washed and then repulped with pure water to adjust the solid content to 11% by mass in terms of zirconium oxide and yttrium oxide, thereby obtaining 60 L of a second aqueous slurry. The electroconductivity of the second aqueous slurry was 70 µS/cm. Subsequently, 4.2 kg (1.3 parts by mol relative to 1 part by mol of a total of zirconium and yttrium in the slurry) of acetic acid was added to the second aqueous slurry, and the mixture was subjected to hydrothermal treatment at 190°C for three hours to obtain a transparent dispersion. The transparent dispersion was washed and concentrated using an ultrafilter membrane to obtain an aqueous dispersion (D) of a zirconium element-containing metal oxide containing the zirconium element-containing metal oxide in an amount of 30% by mass. The aqueous dispersion (D) was a solid solution containing 4.8 mol% of yttrium.

### (Production Example 5: Production of methanol dispersion (E) of zirconium element-containing metal oxide)

An amount of 10 kg of the aqueous dispersion (D) of a zirconium element-containing metal oxide obtained above was concentrated using an ultrafilter membrane. To the concentrated dispersion was added methanol in an amount equivalent to the amount of the obtained filtrate. The concentration of the dispersion and the dilution with methanol were simultaneously performed continuously and parallelly, so that water as a dispersing medium of the dispersion was replaced by methanol while maintaining the amount of the zirconium element-containing metal oxide in the dispersion at 30% by weight. Thus, a methanol dispersion (E) of a zirconium element-containing metal oxide containing the zirconium element-containing metal oxide in an amount of 30% by mass was obtained.

Table 1 shows the pH and the particle sizes of the zirconium element-containing metal oxides of the aqueous dispersions or the methanol dispersions of zirconium element-containing metal oxides produced in Production Examples 1 to 5. The pH of a methanol dispersion was the pH of the aqueous dispersion before the ultrafiltration.

**[Table 1]**

| | Dispersion of zirconium element-containing metal oxide | | | | |
|---|---|---|---|---|---|
| | Particle size | | | D50/D90 | pH |
| | D50 (nm) | D90 (nm) | Dmax (nm) | | |
| Production Example 1: Aqueous dispersion (A) | 5 | 11 | 36 | 0.5 | 10.2 |
| Production Example 2: Methanol dispersion (B) | 12 | 21 | 43 | 0.6 | 10.2 |
| Production Example 3: Aqueous dispersion (C) | 15 | 24 | 51 | 0.6 | 9.5 |
| Production Example 4: Aqueous dispersion (D) | 4 | 8 | 43 | 0.5 | 4.3 |
| Production Example 5: Methanol dispersion (E) | 4 | 7 | 43 | 0.6 | 4.3 |

### (Production Example 6: Production of hard coat liquid)

To 69.7 g of γ-glycidoxypropyltrimethoxysilane were dropwise added 52.3 g of methanol and 16.0 g of dilute hydrochloric acid (0.1N) to perform hydrolysis over 48 hours. Then, 45.3 g of propylene glycol monomethyl ether, 115.1 g of the methanol dispersion (E) of a zirconium element-containing metal oxide, 1.40 g of aluminum(III) tris(2,4-pentanedionate) as a curing catalyst, and 0.11 g of a surfactant (trade name "Ftergent 222F" available from NEOS Co., Ltd.) were added, followed by stirring for 24 hours. Thus, a hard coat liquid was prepared.

### <Example 1>

To 100.0 g of the aqueous dispersion (A) of a zirconium element-containing metal oxide containing the zirconium element-containing metal oxide at a concentration of 30% by mass were added 220.21 g of water, 79.79 g of a water-borne polyurethane resin having a non-volatile content of 37.6% by mass (trade name "EVAFANOL HA-170" available from Nicca Chemical Co., Ltd.), and 0.20 g of a leveling agent (trade name "L-7604" available from Dow Toray). Subsequently, the mixture was stirred to obtain a primer layer-forming composition. The percentage of the zirconium element-containing metal oxide based on the solid content of the primer layer-forming composition was 50% by mass.

### (Formation of primer layer)

Two types of commercially available plastic lens substrates (MR-8 available from Mitsui Chemicals, Inc., a substrate with a refractive index of 1.60; MR-7 available from Mitsui Chemicals, Inc., a substrate with a refractive index of 1.67) were prepared. The primer layer-forming composition (solid concentration 15% by mass) prepared in Example 1 was applied to each lens substrate at a rate of 130 mm/min by a dipping method. The lens substrate coated with the primer layer-forming composition was heated at 90°C for 10 minutes for pre-curing and then heated at 120°C for two hours for finish curing, whereby a primer layer having a film thickness of 1 µm was formed on the lens substrate. Separately, a primer layer having a film thickness of 3 µm was formed on a glass slide substrate in the same manner as described above.

### (Formation of primer layer + hard coat layer)

Two types of commercially available plastic lens substrates (MR-8 available from Mitsui Chemicals, Inc., a substrate with a refractive index of 1.60; MR-7 available from Mitsui Chemicals, Inc., a substrate with a refractive index of 1.67) were prepared. The primer layer-forming composition (solid concentration 15% by mass) prepared in Example 1 was applied to each lens substrate at a rate of 130 mm/min by a dipping method. The lens substrate coated with the primer layer-forming composition was heated at 90°C for 10 minutes for pre-curing, whereby a primer layer having a film thickness of 1 µm was formed on the lens substrate. The hard coat liquid produced in Production Example 6 was applied to the lens substrate coated with the primer layer-forming composition at a rate of 130 mm/min by a dipping method. The lens substrate coated with the hard coat liquid was heated at 90°C for 10 minutes for pre-curing and then heated at 120°C for two hours for finish curing, whereby a hard coat layer having a film thickness of 3 µm was formed.

### <Example 2>

A primer layer-forming composition was obtained as in Example 1 using 100 g of the methanol dispersion (B) of a zirconium element-containing metal oxide containing the zirconium element-containing metal oxide at a concentration of 30% by mass. The percentage of the zirconium element-containing metal oxide based on the solid content of the primer layer-forming composition was 50% by mass.

Formation of primer layer and formation of primer layer + hard coat layer were performed as in Example 1.

### <Example 3>

To 100.0 g of the aqueous dispersion (A) of a zirconium element-containing metal oxide containing the zirconium element-containing metal oxide at a concentration of 30% by mass were added 220.21 g of water, 6.0 g of a surfactant (trade name "DISPERBYK-180" available from BYK Japan KK), 79.79 g of a water-borne polyurethane resin having a non-volatile content of 37.6% by mass (trade name "EVAFANOL HA-170" available from Nicca Chemical Co., Ltd.), and 0.20 g of a leveling agent (trade name "L-7604" available from Dow Toray). Subsequently, the mixture was stirred to obtain a primer layer-forming composition. The percentage of the zirconium element-containing metal oxide based on the solid content of the primer layer-forming composition was 45% by mass.

Formation of primer layer and formation of primer layer + hard coat layer were performed as in Example 1.

### <Example 4>

To 120.0 g of the methanol dispersion (B) of a zirconium element-containing metal oxide containing the zirconium element-containing metal oxide at a concentration of 30% by mass were added 216.17 g of water, 63.83 g of a water-borne polyurethane resin having a non-volatile content of 37.6% by mass (trade name "EVAFANOL HA-170" available from Nicca Chemical Co., Ltd.), and 0.20 g of a leveling agent (trade name "L-7604" available from Dow Toray). Subsequently, the mixture was stirred to obtain a primer layer-forming composition. The percentage of the zirconium element-containing metal oxide based on the solid content of the primer layer-forming composition was 60% by mass.

Formation of primer layer and formation of primer layer + hard coat layer were performed as in Example 1.

### <Example 5>

To 100.0 g of the aqueous dispersion (A) of a zirconium element-containing metal oxide containing the zirconium element-containing metal oxide at a concentration of 30% by mass were added 210.71 g of water, 89.29 g of a water-borne polyurethane resin having a non-volatile content of 33.6% by mass (trade name "Superflex 170" available from Dai-Ichi Kogyo Seiyaku Co., Ltd.), and 0.20 g of a leveling agent (trade name "L-7604" available from Dow Toray). Subsequently, the mixture was stirred to obtain a primer layer-forming composition. The percentage of the zirconium element-containing metal oxide based on the solid content of the primer layer-forming composition was 50% by mass.

Formation of primer layer and formation of primer layer + hard coat layer were performed as in Example 1.

### <Example 6>

A primer layer-forming composition was obtained as in Example 1 using 100.0 g of the aqueous dispersion (C) of a zirconium element-containing metal oxide containing the zirconium element-containing metal oxide at a concentration of 30% by mass. The percentage of the zirconium element-containing metal oxide based on the solid content of the primer layer-forming composition was 50% by mass.

Formation of primer layer and formation of primer layer + hard coat layer were performed as in Example 1.

### <Comparative Example 1>

An attempt was made to prepare a primer layer-forming composition using 100.0 g of the aqueous dispersion (D) of a zirconium element-containing metal oxide containing the zirconium element-containing metal oxide at a concentration of 30% by mass in the same manner as in Example 1. However, aggregates formed, failing to form a primer layer-forming composition.

Table 2 shows the evaluation results of various physical properties of Examples 1 to 6 and Comparative Example 1.

**[Table 2]**

| | Zirconium element-containing metal oxide | Weight change ratio (%) before and after solvent resistance test | Percentage (%) of zirconium element-containing metal oxide in primer layer-forming composition | Primer layer | | | | Primer layer + Hard coat layer | | | |
|---|---|---|---|---|---|---|---|---|---|---|---|
| | | | | Haze (%) | Total light transmittance (%) | Investigation of contamination of HC liquid | Refractive index | Adhesion | Impact resistance | Appearance after weather resistance test | Adhesion after weather resistance test |
| Example 1 | Aqueous dispersion (A) | 8 | 50 | 0.26 | 97.8 | ○ | 1.64 | ○ | ○ | ○ | ○ |
| Example 2 | Methanol dispersion (B) | 8 | 50 | 0.33 | 97.4 | ○ | 1.64 | ○ | ○ | ○ | ○ |
| Example 3 | Aqueous dispersion (A) | 8 | 45 | 0.26 | 97.5 | ○ | 1.61 | ○ | ○ | - | - |
| Example 4 | Methanol dispersion (B) | 8 | 60 | 0.33 | 97.2 | ○ | 1.68 | ○ | ○ | ○ | ○ |
| Example 5 | Aqueous dispersion (A) | 29 | 50 | 0.24 | 97.2 | ○ | 1.64 | ○ | ○ | ○ | ○ |
| Example 6 | Aqueous dispersion (C) | 8 | 50 | 0.11 | 98.1 | ○ | 1.64 | ○ | ○ | ○ | ○ |
| Comparative Example 1 | Aqueous dispersion (D) | 8 | 50 | - | - | - | - | - | - | - | - |

The results in Table 2 demonstrate that a primer layer with high transparency and a high refractive index can be formed from a composition that is obtained using a zirconium element-containing metal oxide having an average particle size within a predetermined range and also having a pH of 8 to 11 when it is in the form of a 30% by mass aqueous dispersion and that has a silicon element content of 20 mol% or less relative to 100 mol% of the zirconium element in the zirconium element-containing metal oxide (A).

## Claims

1. A primer layer-forming composition, comprising
a zirconium element-containing metal oxide (A) and a water-borne polyurethane resin (B),
the zirconium element-containing metal oxide (A) having an average particle size of 1 to 20 nm as measured by a dynamic light scattering method,
the zirconium element-containing metal oxide (A) in a form of a 30% by mass aqueous dispersion having a pH of 8 to 11,
the composition having a silicon element content of 20 mol% or less relative to 100 mol% of the zirconium element in the zirconium element-containing metal oxide (A).

2. The primer layer-forming composition according to claim 1,
wherein the primer layer-forming composition contains the zirconium element-containing metal oxide (A) in an amount of 40 to 80% by mass relative to 100% by mass of solids in the primer layer-forming composition.

3. The primer layer-forming composition according to claim 1,
wherein a solid content of the water-borne polyurethane resin (B) is 20 to 60% by mass relative to a solid content, taken as 100% by mass, of the primer layer-forming composition.

4. The primer layer-forming composition according to any one of claims 1 to 3,
wherein the primer layer-forming composition is used for lenses.

5. A lens coated with the primer layer-forming composition according to any one of claims 1 to 3.

6. A method for producing a primer layer-forming composition, comprising mixing a zirconium element-containing metal oxide (A) with a water-borne polyurethane resin (B),
the zirconium element-containing metal oxide (A) having an average particle size of 1 to 20 nm as measured by a dynamic light scattering method,
the zirconium element-containing metal oxide (A) in a form of a 30% by mass aqueous dispersion having a pH of 8 to 11.
